# EUROPEAN PATENT APPLICATION

(11) **EP 1 059 827 A2**
(43) Date of publication of application: **13.12.2000**
(21) Application number: 00304761.0
(22) Date of filing: 06.06.2000
(51) Int. Cl.: H04Q 11/00, G06F 13/40

(54) **Bus management method, bus network using such bus management method and information provider medium**

(30) Priority: 07.06.1999 JP 16019799
(71) Applicant: SONY CORPORATION, Tokyo (JP)
(72) Inventor: Toguchi, Kazunobu, Shinagawa-Ku, Tokyo (JP)
(74) Representative: Nicholls, Michael John

(57) **Abstract**

A management node can recognize the disconnection of a target bus at a high efficiency. A bus network (10) may be arranged such that buses (21 to 26) may be connected by bridges (31 to 35). In the setting in which a management node (41) may receive a disconnection report, a first step may be executed, whereafter second and third steps may be repeated properly. In the first step, the management node (41) may detect a bridge portal existing in somewhere of a path to a target bus, and may transmit a disconnection report request to the bridge portal. In the second step, the bridge portal may transmit a disconnection report request to a bridge portal (proxy portal) connected thereto. In the third step, the proxy portal may detect the bridge portal existing in the path to the target bus, and may transmit a disconnection report request to the detected bridge portal. The proxy portal may detect the disconnection of the target bus by detecting the disconnection of the detected bridge portal, and may report such disconnection of the target bus to the management node.

## Description

The present invention relates to a bus management method of managing a bus network such as an IEEE 1394 bus network in which a plurality of buses are connected by a bridge, a bus network using such bus network management method and an information provider medium. More specifically, this invention relates to a bus network management method in which a target bus disconnection report request is sequentially propagated from a management node, which will receive a target bus disconnection report, to first and second communication means of a bridge comprising a path to the target bus so that the management node can recognize the disconnection of the target bus at a high efficiency.

As digital signal transmission standards, there have hitherto been available a number of standards such as standards standardized by the IEC (International Electrotechnical Commission) and the IEEE (Institute of Electrical and Electronics Engineers). Of these standards, the IEEE 1394, for example, has received a remarkable attention as a standard suitable for multimedia-use such as to connect home electronic devices such as digital video cassette recorders or to connect these electronic devices and a computer. This IEEE 1394 is known well, and therefore its contents need not be described herein.

At present, the P1394. 1. High Performance Serial Bus Bridges Working Group (hereinafter simply referred to as "P1394. 1 WG") is acting on the technical standardization for standardizing a bridge for mutually connecting a plurality of IEEE 1394 high-speed serial buses. The bridge may be comprised of two communication means, which might be called a bridge portal, connected to the IEEE 1394 bus, whereby data can be transmitted among a plurality of buses through this bridge.

While the number of nodes (IEEE 1394 devices) that can be connected to a single IEEE 1394 bus is limited to 63 at maximum, if a plurality of IEEE 1394 buses are connected by using the bridge and the buses and the bridge constitute a bus network, then it may become possible to connect much more nodes to the IEEE 1394 bus. Heretofore, it has been proposed that data may be transmitted between the bridges (bridge portals) by means of not only a cable but also by means of radio waves, infrared rays or the like.

When a bus network in which a plurality of IEEE 1394 buses are connected by using the bridge is considered, there is a possibility that one or a plurality of buses provided within the network will be disconnected.

On the other hand, it is frequently observed that the IEEE 1394 node has to terminate the current transaction as the bus within the bus network is disconnected. As described above, although these nodes should learn exactly the bus which was disconnected, there has not yet been established a method of informing these nodes of the disconnected bus with a high accuracy.

Therefore, it is an object of the present invention to provide a bus network management method, a bus network using such bus network management method and an information provider medium in which a management node, which will receive a report of a disconnection of a target bus, can recognize the disconnection of the target bus at a high efficiency.

A bus network management method according to the present invention is a management method of enabling a management node existing on a first bus of a bus network comprising a plurality of buses connected thereto by using a bridge comprising first and second communication means to receive a report of a disconnection of a target bus different from the first bus. The bus network management method according to the present invention may comprise the first to third steps which may follow.

In the first step, the management node may detect a first communication means in a bridge existing on a bus on which the management node exists and which serves as a path to the target bus, and may transmit a target bus disconnection report request to the detected first communication means.

In the second step, the first communication means of the bridge which has received the target bus disconnection report request may transmit the target bus disconnection report request to a second communication means coupled thereto.

In the third step, the second communication means of the bridge to which the target bus disconnection report request has been transmitted may detect a first communication means of a bridge existing on a second bus on which the second communication means exists and which serves as a path to the target bus and may transmit the target bus disconnection report request to the detected first communication means if the second bus on which the second communication means exist is not the target bus.

According to the present invention, after the first step was executed, the second and third steps may be repeated properly, whereby the target bus disconnection report request may be sequentially propagated from the management node to the first and second communication means of the bridge serving as the path to the target node. Then, the management node and the second communication means may detect the disconnection of the target bus. For example, the second communication means may detect the disconnection of the target bus by detecting that a first communication means of the bridge detected by the second communication means does not exist on the bus on which the second communication means exists. Then, the second communication means which has detected the disconnection of the target bus may report the disconnection of the target bus to the management node. Thus, the management node may become able to recognize the disconnection of the target bus at a high efficiency.

The present invention will be more clearly understood from the following description, given by way of example only, with reference to the accompanying drawings in which:
FIG. 1 is a diagram showing an example of a bus network in which a plurality of IEEE 1394 buses are connected by using bridges;
FIG. 2 is a block diagram showing a certain bus portion in the bus network shown in FIG. 1;
FIG. 3 is a block diagram showing a bridge;
FIG. 4 is a flowchart showing a setting operation that may be executed by a management node itself when the management node may receive a target bus disconnection report;
FIG. 5 is a diagram showing a format of a write request packet;
FIG. 6 is a diagram showing a format of a data field of a write request packet used when a target bus disconnection report request is issued;
FIG. 7 is a flowchart showing a setting operation that may be executed by a bridge portal when the management node may receive the target bus disconnection report;
FIG. 8 is a diagram showing a transmission format of a target bus disconnection report request between bridge portals;
FIG. 9 is a flowchart showing a setting operation that is executed by a proxy portal when the management node receives the target bus disconnection report;
FIG. 10 is a flowchart showing the manner in which a proxy portal to which the disconnection report request has been transmitted from the bridge portal may detect the disconnection of the target bus and the proxy portal may report such bus disconnection to the management node;
FIG. 11 is a diagram showing a format of a data field of a write request packet used when the disconnection of the target bus may be reported;
FIG. 12 is a flowchart showing an operation in which the management node may recognize the disconnection of the' target bus; and
FIG. 13 is a flowchart showing an operation in which the management node may detect the disconnection of the target bus.

A bus network management method, a bus network using such bus network management method and an information provider medium according to an embodiment of the present invention will hereinafter be described with reference to the drawings. Before describing the contents of the present invention concretely, in order to more clearly understand the present invention, major words and phrases used in the description of this invention will be described in brief.

"Management node" may be an IEEE 1394 node which may intend to learn that a target bus within a bus network is disconnected from a bus network. "Bridge portal" may be a bridge portal, of bridge portals existing in a management node or existing in a local bus of a proxy portal, which will be described later on, which may be a path to the target bus. "Proxy portal" may be the other portal coupled to the bridge portal thereby to construct the bridge.

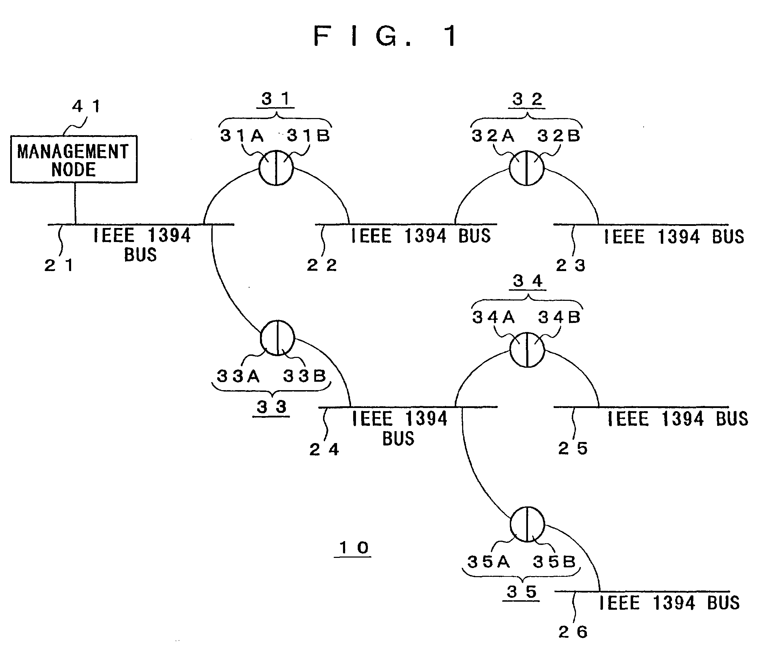

FIG. 1 of the accompanying drawings shows an example of a bus network in which a plurality of IEEE buses (hereinafter simply referred to as "buses" properly) may be connected by using bridges. As shown in FIG. 1, a bus network 10 may be arranged such that IEEE 1394 buses 21 to 26 may be connected by bridges 31 to 35. In that case, bridge portals 31A, 31B comprising the bridge 31 may be connected to the buses 21, 22, respectively. Bridge portal 32A, 32B comprising the bridge 32 may be connected to the buses 22, 23, respectively. Bridge portals 33A, 33B comprising the bridge 33 may be connected to the buses 21, 24, respectively. Bridge portal 34A, 34B comprising the bridge 34 may be connected to the buses 24, 25, respectively. Further, bridge portals 35A, 35B comprising the bridge 35 may be connected to buses 24, 24, respectively. A management node 41 may be connected to the bus 21.

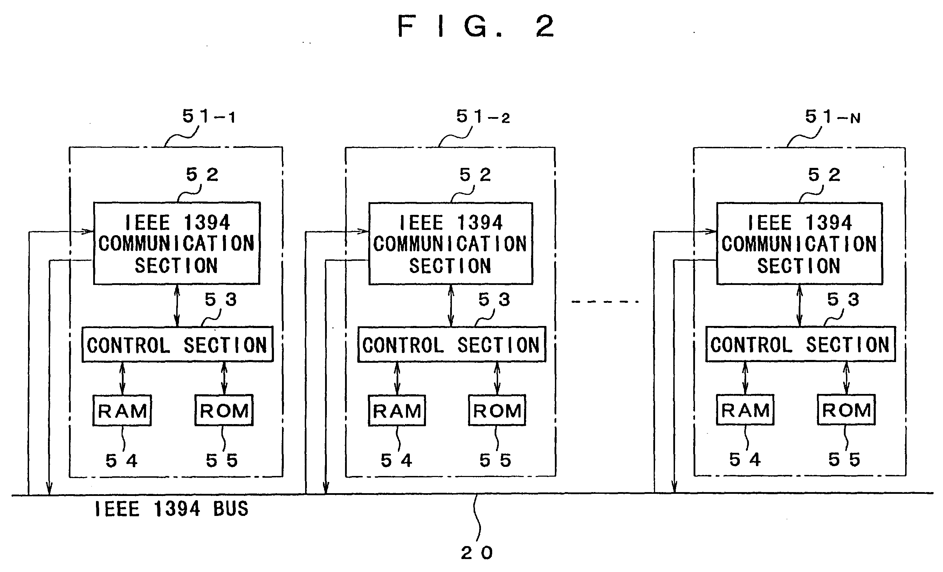

FIG. 2 shows a portion of a certain IEEE 1394 bus 20 comprising the bus network. N nodes 51-1 to 51-N may be connected to this bus 20. The nodes 51-1 to 51-N may include bridge portals comprising the bridge. Each of the nodes 51-1 to 51-N may include an IEEE 1394 communication section 52, a control section 53, a RAM (random-access memory) 54 and a ROM (read-only memory) 55.

Under control of the control section 53, the IEEE 1394 communication section 52 may assemble data supplied from the control section 53 into packets, and may transmit these IEEE 1394 packets through the bus 20. This communication section 52 may extract data from the packets received through the bus 20, and may output the data thus extracted to the control section 53. Also, this IEEE 1394 communication section 52 may issue a request packet such as a read request packet, a write request packet or a lock request packet, and may transmit the same. Furthermore, the IEEE 1394 communication section 52 may issue and transmit a response packet and an acknowledge packet in response to these request packets.

The RAM 54 may function as an IEEE 1394 CSR (Control and Status Registers) and may properly store therein data and programs required by the control section 53 to execute a variety of processing. The ROM 55 may include a configuration ROM, and this ROM 55 may store therein a variety of programs and a variety of parameters, etc.

As the CRS of the bridge portal, there may be available a routing table register defined by the P1394. 1. WG. The routing table may record thereon information indicative of a route by which packets flowing to a bus may be transferred through a bridge portal to the external bus. In the routing table of the bridge portal connected to the target bus, a value corresponding to a bus ID (bus ID) of its target bus may be set to "1". In other bridge portals, a value corresponding to the bus ID may be set to "0".

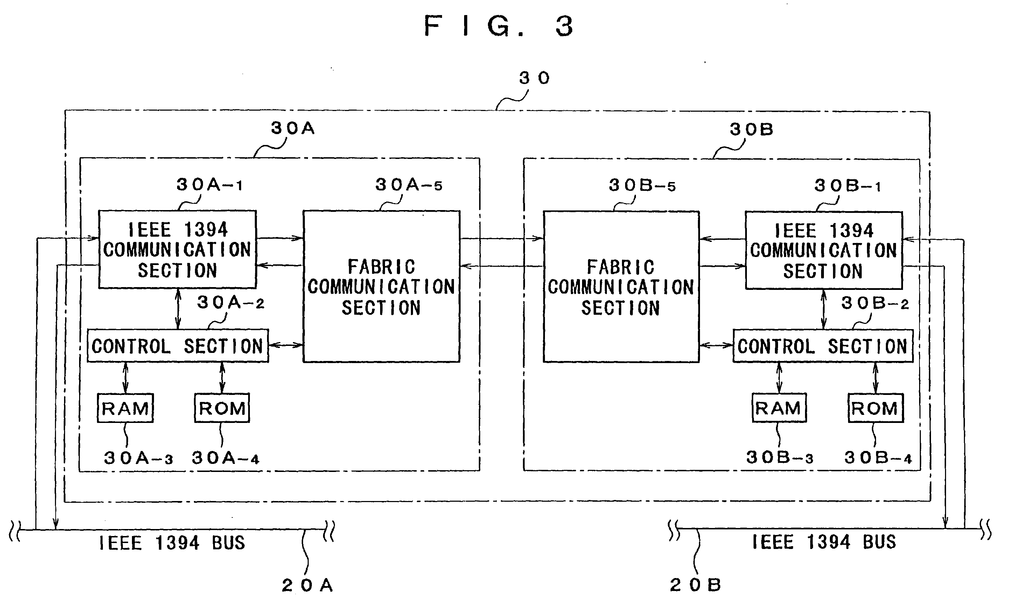

FIG. 3 shows in block form a bridge 30. As shown in FIG. 3, the bridge 30 may be a device for connecting the IEEE1394 buses 20A, 20B, and may be arranged by connecting two bridge portals 30A, 30B serving as first and second communication means. The bridge portals 30A, 30B may be IEEE 1394 nodes, respectively. Incidentally, two bridge portals may be also arranged as one device as well as two devices.

The bridge portal 30A may include an IEEE 1394 communication section 30A-1, a control section 30A-2, a RAM 30A-3, a ROM 30A-4 and a fabric communication section 30A-5. Similarly, the bridge portal 30B may include an IEEE 1394 communication section 30B-1, a control section 30B-2, a RAM 30B-3, a ROM 30B-4 and a fabric communication section 30B-5.

Each of the RAMs 30A-3, 30B-3 may function as an IEEE 1394 bridge CSR, and may maintain not only a register area such as a STREAMS AVAILABLE register defined by the IEEE 1394. 1 WG but also register group area defined by the IEEE 1394 - 1995 (IEEE 1394). The ROMs 30A-4, 30B-4 should be similarly arranged in accordance with the IEEE 1394 bridge and the IEEE 1394 - 1995 format, and may include configuration ROMs in which there may be stored a variety of programs, a variety of parameters and the like.

Under control of the control sections 30A-2, 30B-2, the IEEE 1394 communication sections 30A-1, 30B-1 may assemble data supplied from the control sections 30A-2, 30B-2 into packets and may transmit the packets through the buses 20A, 20B or the fabric communication sections 30A-5, 30B-5. Also, the communication sections 30A-1, 30B-1 may extract data from the packets received at the buses 20A, 20B and may output data to the control sections 30A-2, 30B-2 or the fabric communication sections 30A-5, 30B-5. Further, the communication sections 30A-1, 30B-1 may extract data from the packets received at the fabric communication sections 30A-5, 30B-5 and may output the data to the control sections 30A-2, 30B-2 or the buses 20A, 20B.

As described above, the bridge portals 30A, 30B comprising the bridge 30 may include the fabric communication sections 30A-5, 30B-5. A set of these fabric communication sections 30A-5, 30B-5 may play a role of a fabric of the IEEE 1394 bridge. The fabric communication sections 30A-5, 30B-5 may receive data from the IEEE 1394 communication sections 30A-1, 30B-1 and may transmit the received data to the other fabric communication sections 30B-5, 30A-5 under control of the control sections 30A-2, 30B-2, respectively. Also, the fabric management sections 30A-5, 30B-5 may transmit data from the other fabric communication sections 30B-5, 30A-5 to the IEEE 1394 communication sections 30A-1. 30B-1 and the control sections 30A-2, 30B-2, respectively.

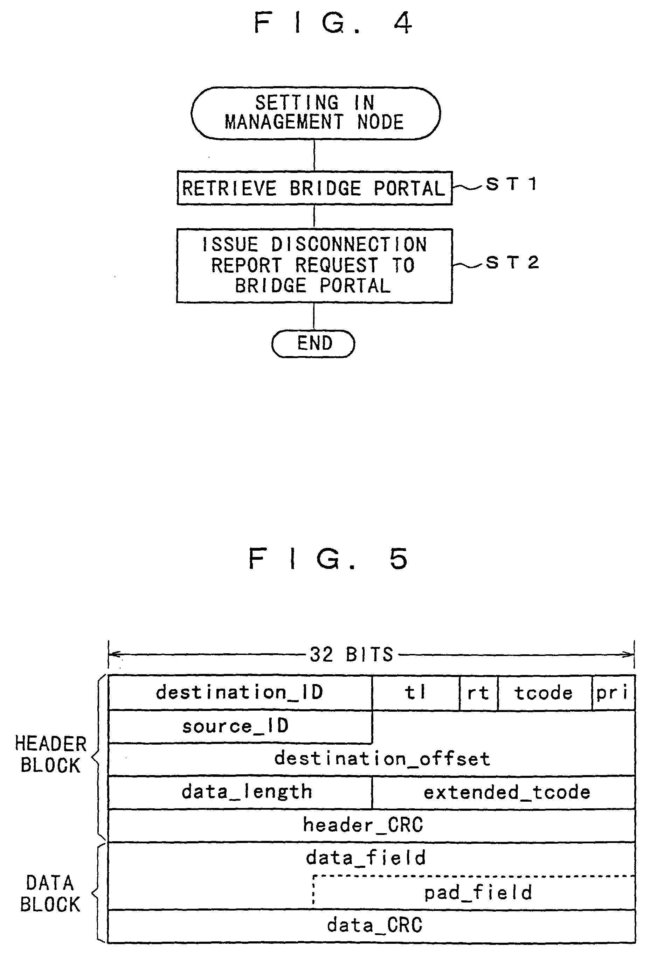

A setting operation executed by the management node 41 in order to receive a report of a disconnection of a target bus in the bus network 10 shown in FIG. 1 will be described next with reference to a flowchart of FIG. 4.

Referring to FIG. 4, initially, at a step ST1, the management node 41 may retrieve the bridge portal. In that case, the management node 41 may detect only one bridge portal existing in the local bus by reading the routing table of the bridge portal existing in the local bus.

In FIG. 2, for example, let it be assumed that the node 51-1 is the management node 41 and that the nodes 51-2 to 51-N are the bridge portals existing in the local bus 20. Then, initially, the node (management node) 51-1 may transmit a read request packet for reading the routing table of the bridge portal 51-2 to the bus 20. The node (bridge portal) 51-2 that has received this read request packet at the IEEE 1394 communication section 52 may insert the value of the routing table into a data field of a response packet and may transmit this response packet to the node 51-1. Then, the node 51-1 that has received this response packet at the IEEE 1394 communication section 52 may read the data field and may check a value corresponding to a bus ID of a target bus. If this value is "1", then such node 51-2 may be set to the bridge portal. If on the other hand this value is "0", then a processing similar to that effected on the above-mentioned node 51-2 may be effected on the next node (bridge portal) 51-3. This operation will hereinafter be repeated to thereby detect the bridge portal.

Referring to FIG. 4, at the next step ST2, the node may issue a target bus disconnection report request to the bridge portal thus detected, and the setting operation is ended. When issuing the target bus disconnection report request to the bridge portal, the management node 41 may transmit a write request packet to the bridge portal.

In FIG. 2, for example, let it be assumed that the node 51-1 is the management node 41 and that the node 51-2 is the bridge portal. Then, the control section 53 in the node 51-1 may transmit a write request packet addressed to a MESSAGE_REQUEST register of CSR within the RAM of the bridge portal 51-2 through the IEEE 1394 communication section 52 to the bus 20. Incidentally, the MESSAGE_ REQUEST register may be defined by a P1212r.

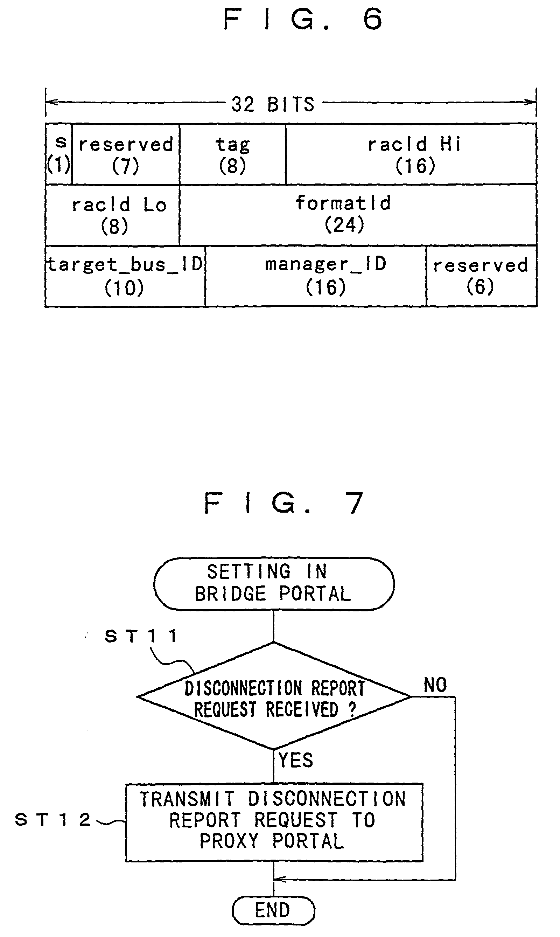

FIG. 5 shows a format of a write request packet. As shown in FIG. 5, this write request packet may comprise a header block and a data block. The header block may comprise a node ID (destination_ID) of a destination node, a transaction label (tl) for indicating a series of transactions, a retry code (rt) for indicating a resend status, a transaction code (tcode) for indicating a type of a packet, priority information (pri), a node ID (source_ID) of a source node, a memory address (destination_ offset) of a destination node, data field length information (data_length), an extended transaction code (extended_tcode) and a header CRC (header_CRC). Moreover, as shown in FIG. 5, the data block may comprise a data field (data_field) in which data is stored and a data CRC (data_CRC).

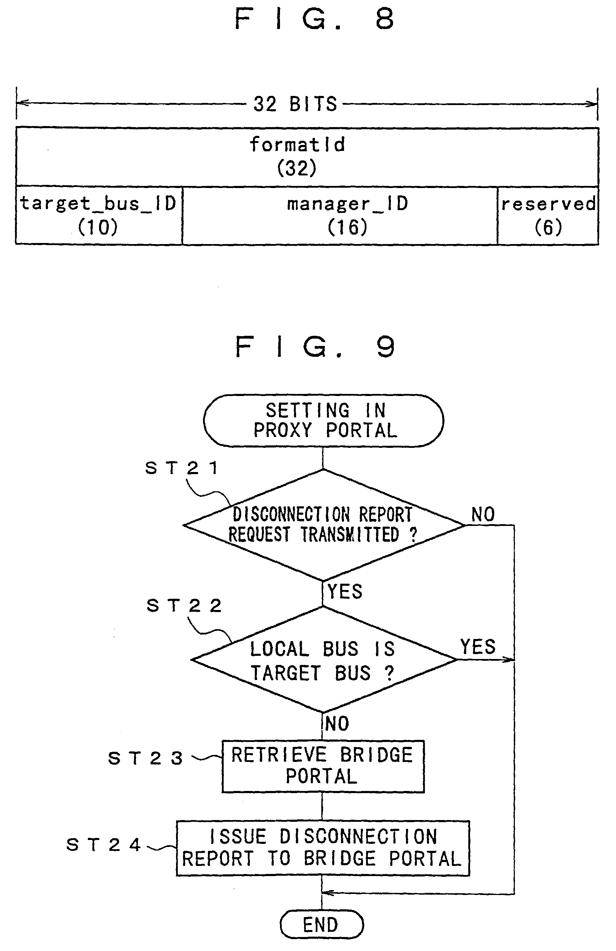

FIG. 6 shows a format of the data field of the write request packet shown in FIG. 5 required when the target bus disconnection report request may be issued as described above. An s-bit may a bit indicating whether or not a response (MESSAGE_RESPONSE) corresponding to the MESSAGE_REQUEST is required. Here, a value of 0 indicating that the response is not necessary may be inserted into the s-bit. A number that determines a corresponding relationship between the MESSAGE_ REQUEST and the MESSAGE_RESPONSE may be inserted into a tag field. Here, a numerical value 0 may be inserted into the tag field. Incidentally, a value of the tag field used in the corresponding MESSAGE_REQUEST may be inserted into the tag field of the MESSAGE_RESPONSE.

As shown in FIG. 6, a racld field may be a 24-bit field which may comprise a combination of a 16-bit racld Hi and an 8-bit racld Lo. A system number that defines how to use a formatId may be inserted into the racld field. Here, a numerical value 0 may be inserted into the racld field as a value indicating the MESSAGE_REQUEST defined by the P1394. 1 WG. A formatId field may be a 24-bit field. A 48-bit of the combination of this formatId field and the racld field may define the kinds of packets. For example, if the racld is 0, then when the formatId is 0, this may mean the disconnection report request packet. On the other hand, when the formatId is 1, this may mean the disconnection report packet. Here, a numerical value 0 may be inserted into the formatId field as a value indicating the disconnection report request. Also, a bus ID of a target bus may be inserted into a target_bus_ID field. Further, a virtual node ID (virtual_node_ID) of the management node 51-1 may be inserted into a manager_ID field.

As is known well, each device connected to the IEEE 1394 bus, i.e. node may have connected thereto a node ID (NODE_ID) inherent in the node. This node ID may comprise a bus ID (BUS_ID) expressing a bus to which nodes are connected and a physical layer ID (PHY_ID) that may be a serial number within the connected bus. Each node within the bus network can be specified by this node ID.

However, when a bus reset occurs in one bus, for example, the physical ID may be changed so that the node ID of each node connected to the bus may be changed. Therefore, in order to transmit a packet from the node of other bus to the node of one bus, it may be necessary to learn a new node ID. The above-mentioned virtual node ID is assumed to be unchangeable even when the node ID is changed. The node of other bus can transmit a packet to the node of one bus by using this virtual node ID. In that case, the virtual node ID may be converted into the ordinary node ID by the bridge, whereby a communication can be made in the same manner as the case in which the node ID is used. Incidentally, this virtual node ID may be defined by the P1394. 1 WG.

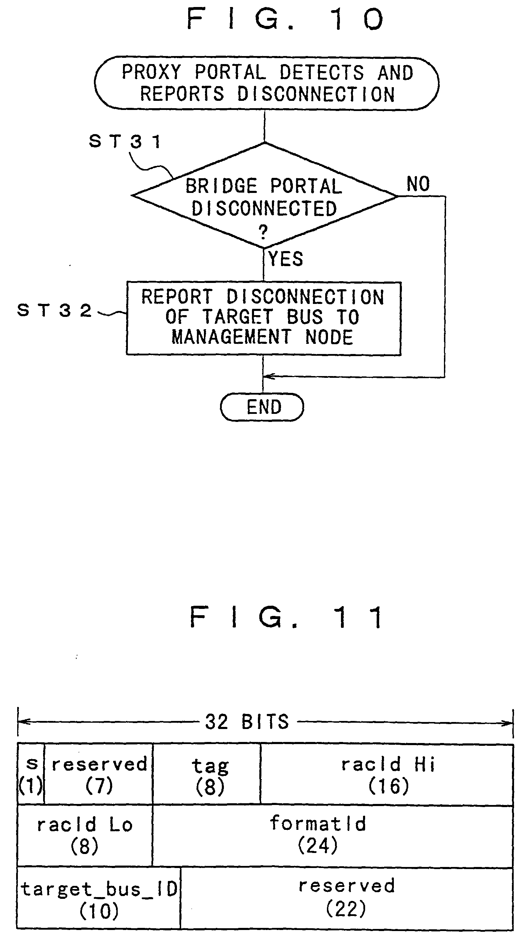

A setting operation executed by the bridge portal when the management node 41 may receive the target bus disconnection report in the bus network 10 shown in FIG. 1 will be described next with reference to a flowchart of FIG. 7. The bridge portal may repeatedly execute the operations shown in the flowchart of FIG. 7 at a predetermined interval.

Referring to FIG. 7, initially, at a decision step ST11, it is determined whether or not the target bus disconnection report request transmitted from the management node 41 or the proxy portal is received. If the target bus disconnection report request is not received as represented by a NO at the decision step ST11, then the setting operation is ended. If on the other hand the target bus disconnection report request is received as represented by a YES at the decision step ST11, then control goes to a step ST12, whereat the disconnection report request may be transmitted to the proxy portal serving as the bridge portal connected thereto, and the setting operation is ended.

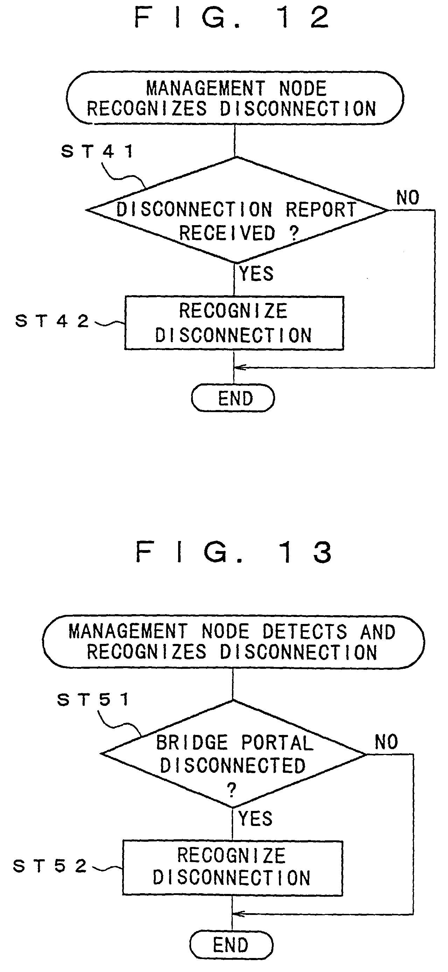

In FIG. 3, for example, let it be assumed that the bridge portal 30A is the bridge portal and that the bridge portal 30B is the proxy portal. When the write request packet concerning the target bus disconnection report request is received by the IEEE 1394 communication section 30A-1 of the bridge portal 30A and contents of its data field are written in the MESSAGE_REQUEST register of CSR within the RAM 30A-3, the control section 30A-2 may transmit data of a transmission format shown in FIG. 8 in a path of the fabric communication section 30A-5, the fabric communication section 30B-5 of the bridge portal 30B, the control section 30B-2, in that order.

In FIG. 8, a formatId field may express the kind of this data. 0 may be inserted into this formatld field as a value which may mean the target bus disconnection report request. A bus ID of a target bus may be inserted into a target_bus_ID field. A virtual node ID of a management node may be inserted into a manager_ID field. That is, the same values as those of the respective fields of the formatId, the target_bus_ID, the manager_ID of the format of the data field shown in FIG. 6 may be inserted into the respective fields of the formatId, the target_bus_ID, the manager_ ID of this transmission format, respectively.

A setting operation executed by the proxy portal when the management node 41 may receive the target bus disconnection report in the bus network 10 shown in FIG. 1 will be described next with reference to a flowchart of FIG. 9. The proxy portal may repeatedly execute the operations shown in the flowchart of FIG. 9 at a predetermined interval.

Referring to FIG. 9, initially, at a decision step ST21, it is determined whether or not the target bus disconnection report request is transmitted from the proxy portal. If the target bus disconnection report request is not transmitted from the proxy portal as represented by a NO at the decision step ST21, then the setting operation is ended. If on the other hand the target bus disconnection report request is transmitted from the proxy portal as represented by a YES at the decision step ST21, then control goes to the next decision step ST22. It is determined at the decision step ST21 whether or not the local bus connected thereto is the target bus. For example, in FIG. 2, let it be assumed that the node 51-1 is the proxy portal. Then, in that case, the control section 53 of the node 51-1 may compare the value of the target_bus_ID field within the data transmitted from the bridge portal with the bus ID of the IEEE 1394 bus 20 serving as the local bus. If they are identical to each other, then it is determined that the local bus is the target bus. If they are not identical to each other, then it is determined that the local bus is not the target bus.

If the local bus is the target bus, then the setting operation is ended. On the other hand, if the local bus is not the target bus, then control goes to a step ST23, whereat the bridge portal is retrieved. In that case, the proxy portal may detect only one bridge portal existing in the local bus by reading the routing table of other bridge portal existing in the local bus in the same manner as the management node 41 had done at the above-mentioned step ST1 of FIG. 4.

Then, control goes to a step ST24, whereat the proxy portal may issue the target bus disconnection report request to the detected bridge portal, and the setting operation is ended. When the proxy portal issues the target bus disconnection report request to the detected bridge portal, the proxy portal may transmit the write request packet of the same data field to the bridge portal in the same manner as the management node 41 had done at the above-mentioned step ST2 in FIG. 4. However, the value 0 may be used as the value of each field of the data field with respect to the racld and the formatId. With respect to the target_bus_ID and the manager_Id, there may be used values of respective field of the same names within the data transmitted from the bridge portal (see the format of FIG. 8).

The manner in which the proxy portal to which the disconnection report request has been transmitted from the bridge portal may detect the disconnection of the target bus and may report the disconnection of the target bus in the bus network shown in FIG. 1 will be described next with reference to a flowchart of FIG. 10. The proxy portal may execute the operations shown in the flowchart of FIG. 10 when a bus reset occurs within the local bus.

Referring to FIG. 10, initially, it is determined at a decision step ST31 by the proxy portal whether or not a bridge portal detected by the proxy portal (see step ST23 in FIG. 9) is disconnected from the local bus. As it is known well, a 64-bit device ID (EUI-64) which is unique for each device may be allocated to all IEEE 1394 devices. A new device that is inserted into the bus or an existing device that was disconnected from the bus can be checked by reading the value of this device ID.

In FIG. 2, for example, the above-mentioned device ID may be recorded on the ROM 55 of each of the nodes 51-1 to 51-N. A method of checking whether or not the bridge portal is disconnected from the local bus will be described herein. In FIG. 2, let it be assumed that the node 51-1 is the proxy portal and that the node 51-N is the bridge portal. Then, let it also be assumed that the node 51-N is disconnected from the IEEE 1394 bus 20. However, it is assumed that the control section 53 in the node 51-1 has already read and stored the value of the device ID recorded on the ROM 55 of the node 51-N in the RAM 54 before the bus reset occurs.

When the node (bridge portal) 51-N is disconnected from the bus 20, a bus reset occurs within the bus 20. After the bus reset occurred and the setting (configuration) of the bus 20 was ended, when the control section 53 in the node (proxy portal) 51-1 may receive information indicative of the occurrence of the bus reset from the IEEE 1394 communication section 52, the control section 53 may sequentially read the device ID of each node connected to the bus 20, and may compare such values with the value of the device ID of the node 51-N stored in the RAM 54. In that case, since the node 51-N is disconnected from the bus 20, any one of the read-out values of the device ID does not agree with the value of the device ID of the node 51-N stored in the RAM 54. Therefore, the control section 53 in the node (proxy portal) 51-1 can recognize that the node (bridge portal) 51-N is disconnected from the bus 20.

If the bridge portal is not disconnected from the bus as represented by a NO at the decision step ST31, then control is ended. If on the other hand the bridge portal is disconnected from the bus as represented by a YES at the decision step ST31, then control goes to a step ST32, whereat the proxy portal may report the disconnection of the target bus to the management node 41, and control is ended. When reporting the disconnection of the target bus to the management node 41, the proxy portal may transmit the write request packet (see FIG. 5) to the MESSAGE_REQUEST register of the CSR within the RAM of the management node 41 by using the virtual node ID of the management node 41 transmitted upon setting.

FIG. 11 shows a format of a data field of that write request packet. This format of the data field has a field similar to that of the format (see FIG. 6) of the data field used when the management node issues the above-mentioned disconnection report request.

Here, a numerical value 0 may be inserted into the s bit as the value indicating that the response is not necessary. A numerical value 0 may be inserted into the tag field. A numerical value 0 may be inserted into the racld field as the value indicating the MESSAGE_REQUEST defined by the P1394. 1 WG. A numerical value 1 may be inserted into the formatId field as the value indicating the disconnection request. Further, the bus ID of the target bus may be inserted into the target_bus_ID field. Incidentally, since the virtual node ID of the management node 41 is not required when the disconnection is reported to the management node 41, the format of the data field shown in FIG. 11 may not be provided with the manager_ID field.

The manner in which the management node 41 may recognize the disconnection in the bus network 10 shown in FIG. 1 will be described next with reference to a flowchart of FIG. 12. The management node 41 may repeatedly execute operations shown in the flowchart of FIG. 12 at a predetermined interval.

Referring to FIG. 12, initially, it is determined at a decision step ST41 whether or not the management node 41 receives the target bus disconnection report from the proxy portal. If the management node 41 does not receive the target bus disconnection report from the proxy portal as represented by a NO at the decision step ST41, then control is ended. If on the other hand the management node 41 receives the target bus disconnection report from the proxy portal as represented by a YES at the decision step ST41, then control goes to the next step ST42. In the step ST42, the management node 41 may recognize that the target bus is disconnected from the bus network 10, and then control is ended.

In FIG. 2, for example, if the node 51-1 is the management node 41, then when the value of the racld field is 0 and the value of the formatId is 1 in the data field of the write request packet addressed to the MESSAGE_REQUEST within the RAM 54 received at the IEEE 1394 communication section 52, the control section 53 in this node 51-1 may recognize that the target bus corresponding to the bus ID indicated by the target_bus_ID field is disconnected from the bus network 10.

The manner in which the management node 41 may detect the disconnection of the target bus in the bus network 10 shown in FIG. 1 will be described next with reference to a flowchart of FIG. 13. The management node 41 may execute operations shown in the flowchart of FIG. 13 when the bus reset occurs within the local bus.

Referring to FIG. 13, initially, it is determined at a decision step ST51 whether or not the bridge portal detected by the management node 41 (see the step ST1 in FIG. 4) is disconnected from the local bus 21. This decision processing may be executed in the same manner as the proxy portal did at the above-mentioned step ST31 in FIG. 10. If it is determined at the decision step ST51 that the bridge portal is not disconnected from the local bus, then control is ended. If on the other hand the bridge portal is disconnected from the local bus as represented by a YES at the decision step ST51, then control goes to a step ST52. At the step ST52, the management node 41 may recognize that the target bus is disconnected from the bus network 10. Then, control is ended.

As set forth above, according to this embodiment, the target bus disconnection report request may be sequentially propagated from the management node for receiving the target bus disconnection report to one and the other bridge portal of the bridge comprising the path to the target bus. If the target bus is disconnected from the bus network 10, then the target bus disconnection may be detected by the proxy portal and may be reported to the management node 41. Alternatively, the target bus disconnection may be detected by the management node 41 itself. Thus, when the target bus is disconnected from the bus network 10, the management node 41 can immediately recognize such disconnection, and hence a communication addressed to the target bus and a communication effected through the target bus after the target bus was disconnected can be aborted. Thus, a useless traffic can be reduced.

Also, since the management node 41 sets the bridge portal between the target buses one by one, all proxy portals can detect the disconnection of the target bus. When the proxy portal detects that the target bus is disconnected from the bus network, such disconnection of the target bus is reported to the management node 41. Thus, even when a bus connected in somewhere of the path to the target node is disconnected, the proxy portal can accurately report the disconnection of the target bus from the bus network 10 to the management node 41.

Moreover, since the management node 41 sets the portal bridge between the target buses one by one, the disconnection of the target bus need not be reported to the whole of the network, but may be reported to only the management node 41. Therefore, it may be possible to prevent a traffic from being uselessly increased in order to report the disconnection.

Incidentally, computer program data for realizing the processing of the respective flowcharts of FIGS. 4, 7, 9, 10, 12 and 13 can be provided by a disk-like recording medium such as an optical disc or a magnetic disc and a tape-like recording medium. Moreover, such computer program data can also be provided by using a telecommunication line so that each node is able to install or download the computer program data.

While the present invention is applied to the IEEE 1394 bus network as described above, it is needless to say that the present invention can be similarly applied to other bus network in which a plurality of buses are connected by a bridge.

According to the present invention, the target bus disconnection report request may be sequentially propagated from the management node, which will receive the target bus disconnection report, to the first and second communication means of the bridge comprising the path to the target node. When the target bus may be disconnected from the bus network, the disconnection of the target bus may be detected by the second communication means of the bridge, for example, and may be reported to the management node. Therefore, when the target bus may be disconnected from the bus network, the management node can recognize such disconnection immediately, and can stop the communication addressed to the target bus or the communication passed through the target bus after the target bus was disconnected, thereby resulting in the useless traffic being reduced.

Further, the management node may set the first and second communication means of the bridge between the target buses one by one, the second communication means of the bridge existing in the path to the target bus may detect the disconnection of the target bus, and may report such disconnection of the target bus to the management node. Therefore, even when the bus existing in somewhere of the path to the target node is disconnected, the disconnection of the target bus can be accurately reported from the bus network to the management node.

Furthermore, the management node may set the first and second communication means of the bridge between the target buses one by one, whereby all proxy portals can learn the virtual node ID of the management node. As a result, the disconnection of the target bus need not be reported to the whole of the network, but may be reported to only the management node. Therefore, the traffic wasted when the disconnection should be reported can be prevented from being increased.

Having described a preferred embodiment of the invention with reference to the accompanying drawings, it is to be understood that the invention is not limited to that precise embodiment and that various changes and modifications could be effected therein by one skilled in the art without departing from the spirit or scope of the invention as defined in the appended claims.

## Claims

1. A bus network management method for use in a management method for enabling a management node existing in a first bus of a bus network to which a plurality of buses are connected by using a bridge comprising coupled first and second communication to receive a disconnection report of a target bus different from said first bus, the bus network management method comprising the steps of:
a step in which said management node detects a first communication means of said bridge existing on a bus on which said management node exists and which is served as a path to said target bus and transmits a disconnection report request of said target bus to said detected first communication means;
a step in which a first communication means of said bridge which received said target bus disconnection report request transmits said target bus disconnection report request to said second communication means connected thereto; and
a step in which a second communication means of said bridge to which said target bus disconnection report request was transmitted detects a first communication means of said bridge existing in said second bus on which said second communication means exists and which is served as a path to said target bus and transmits said target bus disconnection report request to said detected first communication means if a second bus on which said second communication means exists is not said target bus.

2. A bus network management method according to claim 1, further comprising a step in which a second communication means of said bridge to which said target bus disconnection report request was transmitted transmits said target bus disconnection report to said management node if said second communication means detects a disconnection of said target bus.

3. A bus network management method as claimed in claim 2, wherein a second communication means of said bridge to which said target bus disconnection report request was transmitted detects a disconnection of said target bus by detecting that a first communication means of said bridge detected by said second communication means does not exist in said second bus on which said first communication means exists.

4. A bus network management method according to claim 1, 2 or 3 further comprising a step in which said management node detects a disconnection of said target bus.

5. A bus network management method as claimed in claim 4, wherein said management node detects a disconnection of said target bus by detecting that a first communication means of said bridge detected by said management node does not exist in said first bus on which said management node exists.

6. A bus management method as claimed in any preceding claim, wherein said plurality of buses are IEEE 1394 buses, respectively, and said first and second communication means are bridge portals, respectively.

7. A bus network for use in a network in which a plurality of buses are connected by using a bridge comprising coupled first and second communication means, the bus network comprising:
a management node existing in a first bus of said plurality of buses, said management node for receiving a report of a disconnection of a target bus different from said first bus;
said management node including a first detection means for detecting a first communication means of said bridge existing on a bus on which said management node exists and which serves as a path to said target bus and a first transmission means for transmitting a disconnection report request of said target bus to said detected first detection means;
said first communication means of said bridge including a transmission means for transmitting said target bus disconnection report request to said second communication means coupled thereto if said first communication means receives said target bus disconnection report request; and
said second communication means of said bridge including a second detection means for detecting a first communication means of said bridge existing on a second bus and which serves as a pat to said target bus and a second transmission means for transmitting said target bus disconnection report request to said detected first communication means if said second bus on which said second communication means exists is not said target bus.

8. A bus network as claimed in claim 7, wherein said second communication means of said bridge further includes a third detection means for detecting a disconnection of said target bus and a third transmission means for transmitting said target bus disconnection report to said management node.

9. A bus network as claimed in claim 8, wherein said third detection means detects a disconnection of said target bus by detecting that said first communication means of said bridge detected by said second detection means does not exist on said second bus on which said second communication means exists.

10. A bus network as claimed in claim 7, 8 or 9 wherein said management node further includes a fourth detection means for detecting a disconnection of said target bus.

11. A bus network as claimed in claim 10, wherein said fourth detection means detects a disconnection of said target bus by detecting that a first communication means of said bridge detected by said first detection means does not exist on said first bus on which said management node exists.

12. A bus network as claimed in any one of claims 7 to 11, wherein said plurality of buses are IEEE 1394 buses, respectively, and said first and second communication means are bridge portals, respectively.

13. In an information provider medium for providing a computer program for enabling a management node existing on a first bus of a bus network comprising a plurality of buses connected thereto by using a bridge comprising coupled first and second communication means to receive a report of a disconnection of a target bus different from said first bus, said information provider medium for providing a computer program to execute at least one of the steps of:
a step in which said management node detects a first communication means of said bridge existing on a bus on which said management node exists and which serves as a path to said target bus and transmits a disconnection report request of said target bus to said detected first communication means;
a step in which a first communication means of said bridge that has received said target bus disconnection report request transmits said target bus disconnection report request to said second communication means coupled thereto;
a step in which a second communication means of said bridge to which said target bus disconnection report request was transmitted detects a first communication means of said bridge existing on a second bus and which serves as a path to said target bus and transmits said target bus disconnection report request to said detected first communication means if said second bus on which said second communication means exists is not said target bus;
a step in which a second communication means of said bridge to which said target bus disconnection report request was transmitted transmits said target bus disconnection report to said management node if said second communication means detects that said target bus is disconnected; and
a step in which said management node detects the disconnection of said target bus.

14. A computer readable storage medium having recorded thereon code components that, when loaded on a computer and executed will cause that computer to operate according to any one of claims 1 to 6.
